# EUROPÄISCHE PATENTANMELDUNG

(11) **EP 1 070 673 A1**
(43) Veröffentlichungstag der Anmeldung: **24.01.2001**
(21) Anmeldenummer: 00890213.2
(22) Anmeldetag: 10.07.2000
(51) Int. Cl.: B65G 1/137

(54) **Vorrichtung zur Einleitung und/oder Bestätigung eines Kommissionierauftrages**

(30) Priorität: 20.07.1999 AT 125299
(71) Anmelder: P.E.E.M. Förderanlagen Ges.m.b.H., 8051 Graz (AT)
(72) Erfinder: Neukam, Helmut, Hausmannstätten (AT)
(74) Vertreter: Kliment, Peter

(57) **Zusammenfassung**

Vorrichtung zur Einleitung und/oder Bestätigung eines Kommissionierauftrages, bei dem die zu kommissionierenden Waren aus Speicherbehältern (6) entnommen werden, wobei jeweils eine solche Vorrichtung im Ausgabebereich von jeweils einem Speicherbehälter (6) angeordnet ist und mit einer zentralen Rechnereinheit verbunden ist, wobei jeder Kommissionierauftrag über die zentrale Recheneinheit erfasst und am Kommissionierplatz entsprechend angezeigt wird. Um das Bestätigen bzw. Einleiten eines bestimmten Kommissionierauftrages zu beschleunigen und somit die Auftragsbearbeitungszeit zu verkürzen, ist vorgesehen, dass die Vorrichtung zur Einleitung und/oder Bestätigung des Kommissionierauftrages durch einen Sensor (2) gebildet ist, dessen Erfassungsbereich (5) in den Ausgabebereich der entsprechenden Speicherbehälter (6) gerichtet ist und der Sensor (2) nach Ansprechen ein entsprechendes Rückmeldungssignal an die zentrale Recheneinheit über die Einleitung bzw. die Bestätigung des die jeweiligen Speicherbehälter (6) betreffenden Kommissionierauftrages liefert.

## Beschreibung

Die vorliegende Erfindung bezieht sich auf eine Vorrichtung zur Einleitung und/oder Bestätigung eines Kommissionierauftrages gemäß dem Oberbegriff des Anspruchs 1.

Die Abarbeitung von Kommissionieraufträgen ist immer dann erforderlich, wenn einzelne Waren aus einem größeren Sortiment auf Kundenwunsch zusammengestellt werden sollen. Nach dem der Kunde seinen Auftrag deponiert hat, wird ein Kommissionierauftrag computerunterstützt erstellt und gespeichert. Das Computersystem schickt dann an diejenigen Befüllstationen, wo die Kommissionierung stattfinden soll, die entsprechenden Daten, die dort wiederum von einer Computereinheit erfasst werden. Der an dieser Station oder-in diesem Bereich arbeitenden Person wird aufgrund der empfangenen Daten angezeigt aus welchen Speicherbehältern sie wie viele Waren kommissionieren soll. Nachdem die Kommissionierung aus einem Speicherbehälter beendet ist, wird an einer beispielsweise im Ausgabebereich dieser Speicherbehälter angeordneten Vorrichtung ein Knopf gedrückt. Damit wird dem Computersystem bestätigt, dass die Kommissionierung aus einer bestimmten Station und einem bestimmten Speicherbehälter erfolgt ist.

Ferner gibt es verschiedenste Waren, die zwar nicht ganz manuell, wie oben beschrieben kommissioniert werden können, wo jedoch ein automatischer Ausgabemechanismus vorhanden ist, jedoch zumindest eine, den Kommissioniervorgang einleitende und überwachende Person anwesend sein muß. Auch in diesem Fall muß diese Person gemäß dem Stand der Technik einen Knopf betätigen, um den Kommissioniervorgang betreffend einen bestimmten Speicherbehälter (=bestimmte Ware) einzuleiten.

Nachteil dieser Bestätigungsart bzw. Einleitungsart nach dem Stand der Technik ist der damit verbundene Zeitaufwand, welcher für das Knopfdrücken benötigt wird. Bei bis zu 300.000 Zugriffe pro Tag ergibt sich ein großer Zeitaufwand, der nur für das Bestätigen der Kommissionieraufträge aufgewendet werden muß.

Ziel der vorliegenden Erfindung ist daher eine Vorrichtung, welche das Bestätigen bzw. Einleiten eines bestimmten Kommissionierauftrages erleichtert und somit Abarbeitungszeit einsparen hilft.

Erfindungsgemäß wird dies durch die kennzeichnenden Merkmale des Anspruchs 1 erreicht.

Dadurch ist es nicht erforderlich einen extra Knopf zur Bestätigung bzw. Einleitung eines Kommissionierauftrages zu drücken. Im Falle der manuellen Kommissionierung ist es ausreichend, wenn die kommissionierende Person mit dem Kommissionieren beginnt, dh. in den jeweiligen Speicherbehälter hineingreift, um die zu kommissionierenden Waren zu entnehmen.

Im Falle der manuellen Auslösung eines Kommissionierauftrages ist es ausreichend, dass die an diesem Platz arbeitende Person sich mit der Hand kurz in den Bereich des Sensors bewegt, wodurch der sodann automatische Kommissioniervorgang initiiert wird.

In beiden Fällen bestätigt der Sensor dem Computersystem die auftragsgemäße Kommissionierung der Waren aus den je nach Auftrag entsprechenden Speicherbehältern.

Die Ausbildung des erfindungsgemäßen Sensors als Infrarotsensor gemäß Anspruch 2, ermöglicht den Einsatz eines einfachen, handelsüblichen Sensors.

Durch das Merkmal des Anspruchs 3 ist garantiert, dass selbst bei umfangreichen Kommissioniersystemen jedem Speicherbehälter ein Sensor zugeordnet werden kann und so in weiterer Folge für jede zu kommissionierende Ware eine Bestätigung des Kommissionierauftrages erfolgen kann.

Das Merkmal des Anspruchs 4 garantiert, dass die Sensoren erst aktiviert werden, wenn sichergestellt ist, dass der richtige Kommissionierbehälter, der für diesen Auftrag vorgesehen ist, bereit steht. Ein unbeabsichtigtes Auslösen des Sensors ohne, dass der richtige Kommissionierbehälter bereit steht, ist somit nicht möglich.

Das Merkmal des Verfahrens nach Anspruch 5 bewirkt wiederum eine Vereinfachung und Automatisation des Einleitens bzw. Bestätigen eines Kommissioniervorgangs, was in weiterer Folge zu einer wesentlichen Zeitersparnis führt und daher zu einer Steigerung der Produktivität.

Im folgenden erfolgt nun eine detaillierte Beschreibung einer bevorzugten Ausführungsform einer erfindungsgemäßen Vorrichtung und eines entsprechenden erfindungsgemäßen Verfahrens. Dabei zeigt
- Fig. 1: eine bevorzugte Ausführungsform einer erfindungsgemäßen Vorrichtung
- Fig. 2: eine Anordnungsmöglichkeit der erfindungsgemäßen Vorrichtung
- Fig. 3: eine schematische Skizze eines Kommissioniersystems zur Anwendung der erfindungsgemäßen Vorrichtung

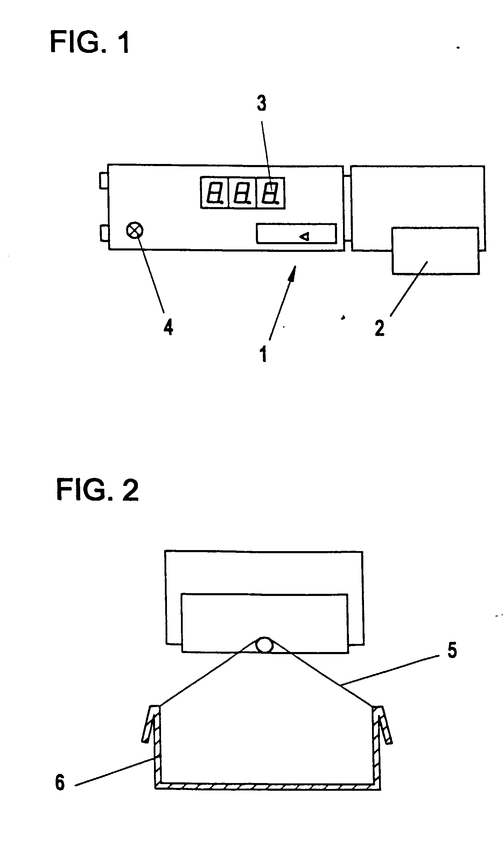

Fig. 1 zeigt eine bevorzugte Ausführungsform einer erfindungsgemäßen Vorrichtung 1. Die Vorrichtung 1 beinhaltet neben dem Sensor 2 zusätzlich eine elektronische Anzeige 3 betreffend die zu kommissionierende Stückzahl sowie eine Entnahmeortanzeige 4. Der Sensor ist so angebracht, dass sein Erfassungsbereich 5 in den jeweiligen, diesem Sensor zugeordneten Ausgabebereich eines Speicherbehälters 6 reicht (Fig. 2), ohne dabei einen anderen Speicherbehälter, der andere Waren enthält, ebenfalls mitzuerfassen.

Unabhängig davon, ob es sich bei dem Kommissioniersystem um ein hochtechnisiertes handelt, bei welchem die Kommissionierbehälter automatisiert zu den jeweiligen Befüllstationen zugeführt werden, oder aber um ein einfacheres System, in welchem die kommissionierende Person den oder die Kommissionierbehälter manuell zuführt, ist es erforderlich, daß jeder Kommissionierauftrag computerunterstützt erfasst wird. In weiterer Folge erfolgt dann die Aufteilung des Kommissionierauftrages auf die entsprechenden Befüllstationen bzw. innerhalb der Befüllstationen auf die entsprechenden Speicherbehälter. Die Aufteilung kann dabei vollautomatisch erfolgen, also ausschließlich computergestützt oder aber manuell, also durch eine Person, die die jeweiligen Kommissionieraufträge den einzelnen Stationen zuordnet.

Im vorliegenden Beispiel zeigt die erfindungsgemäße Vorrichtung 1 durch Aufleuchten beispielweise einer Lampe 4, den Entnahmeort an. Da jeweils eine erfindungsgemäße Vorrichtung 1 jeweils einem Speicherbehälter 6 zugeordnet ist, weiß die kommissionierende Person, dass bei Aufleuchten der Entnahmeortanzeige 4 an einer erfindungsgemäßen Vorrichtung 1, Waren aus dem zugeordneten Speicherbehälter 6 entnommen werden müssen. Die Anzahl der zu entnehmenden Waren sind der ebenfalls an der erfindungsgemäßen Vorrichtung angeordneten, elektronischen Anzeige 3 zu entnehmen.

Beginnt nun die kommissionierende Person aus dem entsprechenden Speicherbehälter 6 zu kommissionieren, spricht der erfindungsgemäße Sensor 2 auf diese Bewegung in den Speicherbehälter 6 an, wodurch dem Computersystem ein Bestätigungssignal gesendet wird, welches den Kommissionierauftrag bezüglich der Waren aus dem einen, dem Sensor 2 zugeordneten Speicherbehälter 6, bestätigt.

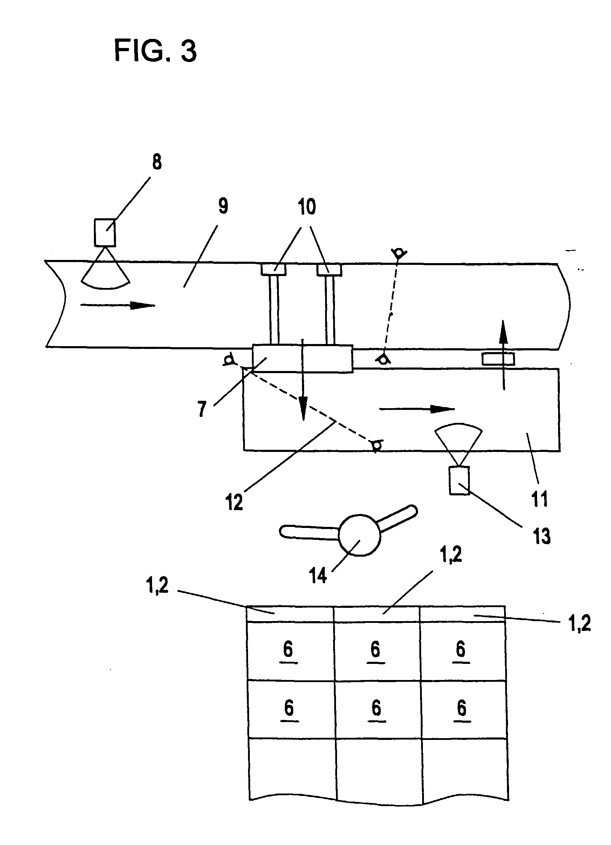

Fig. 3 zeigt eine schematische Skizze eines Kommissioniersystems mit automatischer Zuführung eines Kommissionierbehälters zur Befüllstation. Der Kommissionierbehälter 7 ist dabei mit einem Barcode gekennzeichnet, dem ein bestimmter Kommissionierauftrag zugeordnet ist. Der Kommissionierbehälter 7 wird vom Scanner 8 gescannt. Nach Überprüfung des Barcodes durch das Computersystem wird festgestellt, in welche Befüllstation der Kommissionierbehälter 7 transportiert werden soll. An entsprechender Stelle des Hauptförderbands 9, wird der Kommissionierbehälter 7 durch an sich bekannte Mittel 10 in eine Befüllstation 11 geschoben, wo über einen Lichtschranken 12 ein weiterer Scanner 13 aktiviert wird, welcher überprüft, ob der richtige Kommissionierbehälter sich in der richtigen Befüllstation befindet. Wird dieser Umstand durch das Computersystem bestätigt erfolgt die Aktivierung der erfindungsgemäßen Vorrichtung, wobei jeweils eine solche Vorrichtung gemäß Fig. 2 oberhalb jeweils eines Speicherbehälters 6 angeordnet ist und mehrere solche Speicherbehälter 6 nebeneinander. Aufgrund der eingescannten Daten des Kommissionierbehälters 7 durch den Scanner 13 erfolgt nun in an sich bekannter Weise das Aufleuchten der Entnahmeortanzeigen 4 und der Stückzahlanzeigen 3 auf den erfindungsgemäßen Vorrichtungen 1. Die kommissionierende Person 14 ist aufgrund dieser Daten informiert aus welchen Speicherbehältern 6 sie wie viel der dort gelagerten Waren kommissionieren muß. Die Speicherbehälter 6 sind im vorliegenden Beispiel so angeordnet, dass jeweils die gleichen Waren enthaltende Speicherbehälter in einer Reihe angeordnet sind. Ist der erste Speicherbehälter einer Reihe leer, dann kann dieser entnommen werden und die hinteren Speicherbehälter rücken nach. Prinzipiell ist jedoch jede beliebige Anordnung der Speicherbehälter denkbar.

Die kommissionierende Person 14 beginnt den Kommissioniervorgang bei einem entsprechenden Speicherbehälter in dem sie in diesen hineingreift, um die zu kommissionierenden Waren zu entnehmen. Dabei wird sie vom Sensor 2 der erfindungsgemäßen Vorrichtung 1 erfasst, der daraufhin ein Bestätigungssignal an das Computersystem sendet, welches den Kommissioniervorgang diese Ware betreffend bestätigt.

Bei halbautomatischen Kommissioniervorgängen reicht es aus wenn die kommissionierende Person 14 eine Handbewegung im Erfassungsbereich des Sensors tätigt, um den dann automatischen Kommissioniervorgang einzuleiten. Eine entsprechende automatische Ausgabeeinheit ist dann Voraussetzung für den eigentlichen Kommissioniervorgang. Auch in diesem Fall erfolgt eine Bestätigung des Kommissioniervorganges an das Computersystem.

## Patentansprüche

1. Vorrichtung zur Einleitung und/oder Bestätigung eines Kommissionierauftrages, bei dem die zu kommissionierenden Waren aus Speicherbehältern (6) entnommen werden, wobei jeweils eine solche Vorrichtung (1) im Ausgabebereich von jeweils einem Speicherbehälter (6) angeordnet ist und mit einer zentralen Rechnereinheit verbunden ist, wobei jeder Kommissionierauftrag über die zentrale Recheneinheit erfasst und am Kommissionierplatz entsprechend angezeigt wird, **dadurch gekennzeichnet**, dass die Vorrichtung zur Einleitung und/oder Bestätigung des Kommissionierauftrages durch einen Sensor (2) gebildet ist, dessen Erfassungsbereich in den Ausgabebereich der entsprechenden Speicherbehälter (6) gerichtet ist und der Sensor (2) nach Ansprechen ein entsprechendes Rückmeldungssignal an die zentrale Recheneinheit über die Einleitung bzw. die Bestätigung des die jeweiligen Speicherbehälter (6) betreffenden Kommissionierauftrages liefert.

2. Vorrichtung nach Anspruch 1, **dadurch gekennzeichnet**, dass der Sensor (2) ein Infrarotsensor ist, der auf Bewegungsänderungen reagiert.

3. Vorrichtung nach Anspruch 1 und 2 zur Anordnung in einer Befüllstation innerhalb eines ein Hauptförderband und mehrere Befüllstationen (11) aufweisendes Kommissioniersystems, in welchem eine zentrale Recheneinheit den innerhalb des Kommissioniersystems zirkulierenden Kommissionierbehältern (7) jeweils einen Kommissionierauftrag zuordnet und die einzelnen Kommissionierbehälter (7) mittels einem diesen Auftrag zugeordneten Barcode versehen sind und die jeweilige Position der einzelnen Kommissionierbehälter (7) innerhalb des Kommissioniersystems mittels mehrerer Scanner (13) erfasst wird, **dadurch gekennzeichnet**, dass jeweils eine solche Vorrichtung (1) zur Einleitung und/oder Bestätigung eines Kommissionierauftrages oberhalb jeweils eines in einer Befüllstation (11) angeordneten Speicherbehälters (6) angeordnet ist.

4. Vorrichtung nach Anspruch 3, **dadurch gekennzeichnet**, dass der Sensor (2) nach Lesung und Prüfung des am in die jeweilige Befüllstation (11) einfahrenden Kommissionierbehälters (7) angebrachten Barcodes aktiviert wird.

5. Verfahren zur Einleitung und oder Bestätigung eines Kommissionierauftrages, bei dem die zu kommissionierenden Waren aus Speicherbehältern (6) entnommen werden, **dadurch gekennzeichnet**, dass durch Hineingreifen in den Ausgabebereich eines Speicherbehälters (6) der jeweilige Kommissionierauftrag für die in diesem Speicherbehälter befindliche Ware(n) eingeleitet bzw. bestätigt wird.
